# EUROPÄISCHE PATENTANMELDUNG

(11) **EP 1 098 377 A1**
(43) Veröffentlichungstag der Anmeldung: **09.05.2001**
(21) Anmeldenummer: 00117500.9
(22) Anmeldetag: 12.08.2000
(51) Int. Cl.: H01M 2/12

(54) **Mehrzelliger, dicht verschlossener Bleiakkumulator**

(30) Priorität: 06.11.1999 DE 19953417
(71) Anmelder: VB Autobatterie GmbH, 30419 Hannover (DE)
(72) Erfinder: Mühe, Hans, 31137 Hildesheim (DE); Höcker, Jürgen, Dr., 31675 Bückeburg (DE)
(74) Vertreter: Kaiser, Dieter Ralf, Dipl.-Ing.

(57) **Zusammenfassung**

Bei einem mehrzelligen, dicht verschlossenen Bleiakkumulator mit einem mehrere Zellen aufnehmenden Gehäuse und einem das Gehäuse abschließenden Blockdeckel, der einen Basisdeckel und einen darüberliegenden Abschlußdeckel mit einer Zentralentgasung besitzt, ist jede Einzelzelle mit einem Entgasungsventil in ihrer Entgasungsöffnung versehen, dessen Auslaßöffnung mit der zentralen Entgasung in Verbindung steht. Jeder Einzelzelle ist eine Öffnung (6) im Basisdeckel (1) zugeordnet, und mit dem Rand dieser Öffnung (61) ist ein Ventilkörper (10) unlösbar verbunden, der ein Dichtteil (16) enthält. Der Ventilkörper (10) ist in der Öffnung des Basisdeckels (1) durch Ultraschallschweißen, gas- und flüssigkeitsdicht und unlösbar eingesetzt.

## Beschreibung

Gegenstand der Erfindung ist ein mehrzelliger, dicht verschlossener Bleiakkumulator mit einem mehrere Zellen aufnehmenden Gehäuse und einem das Gehäuse abschließenden Blockdeckel, der einen Basisdeckel und einen darüberliegenden Abschlußdeckel mit einer Zentralentgasung besitzt, wobei jede Einzelzelle mit einem Entgasungsventil in ihrer Entgasungsöffnung versehen ist, dessen Auslaßöffnung mit der zentralen Entgasung in Verbindung steht.

Bei dicht verschlossenen Akkumulatoren, in welchen der Elektrolyt entweder in einem Gel oder in einem Glasvlies festgelegt wird, ist es üblich, die Entgasungsöffnungen mittels Entgasungsventilen zu verschließen. Dabei ist es beispielsweise aus der DE 196 09 011 C2 bekannt, jeder Einzelzelle ein Entgasungsventil mit Gasauslaßöffnung zuzuordnen und in den Akkumulatorendeckel einen zentralen Entgasungskanal zu integrieren, der die Gasauslaßöffnungen der Entgasungsventile verbindet. Das Entgasungsventil ist dabei in der Form eines üblichen Verschlußstopfens aufgebaut, der von oben in die Zelle eingeführt wird und der das eigentliche Ventil enthält. Problematisch ist dabei insbesondere, dass bei einem derartigen Verschlußstopfen eine Abdichtung sowohl in der Ebene des Basisdeckels als auch in der Ebene des Abschlußdeckels erfolgen muss, was besonders enge Toleranzen bei der Herstellung des Verschlußstopfens notwendig macht. Darüber hinaus sind diese bekannten Verschlußstopfen aus einer Vielzahl von Teilen und Dichtungselementen aufgebaut, was deren Herstellung verteuert und kompliziert.

Der Erfindung liegt die Aufgabe zugrunde, eine Ventilanordnung für gasdicht verschlossene, mehrzellige Bleiakkumulatoren anzugeben, welche einfach herstellbar und einfach montierbar ist, und welche insbesondere einen gas- und flüssigkeitsdichten Einbau des Ventilkörpers gewährleistet.

Diese Aufgabe wird erfindungsgemäß bei einem elektrischen Akkumulator der in Anspruch 1 angegebenen Gattung durch die kennzeichnenden Merkmale des Anspruchs 1 gelöst. In den Unteransprüchen sind weitere Ausgestaltungen der Erfindung angegeben.

Durch die Erfindung ist es insbesondere möglich, bei einem mehrzelligen, gasdicht verschlossenen Akkumulator die an sich bekannte Konstruktion eines Doppeldeckels, wie sie beispielsweise der EP 570 703 A1 zu entnehmen ist, beizubehalten und durch die Öffnungen im Oberdeckel hindurch einen erfindungsgemäßen Ventilkörper in die Zelle einzubringen, der die Öffnung im Basisdeckel gas- und flüssgkeitsdicht verschließt.

Im folgenden ist der Gegenstand der Erfindung anhand der Figuren näher erläutert.
- Figur 1: zeigt einen Teil eines Akkumulatorendeckels im Querschnitt.
- Figur 2: zeigt den Ventilkörper und seine Einzelteile in den Figuren 2a - 2d.
- Figur 3: zeigt das Dichtteil im Ventilkörper.

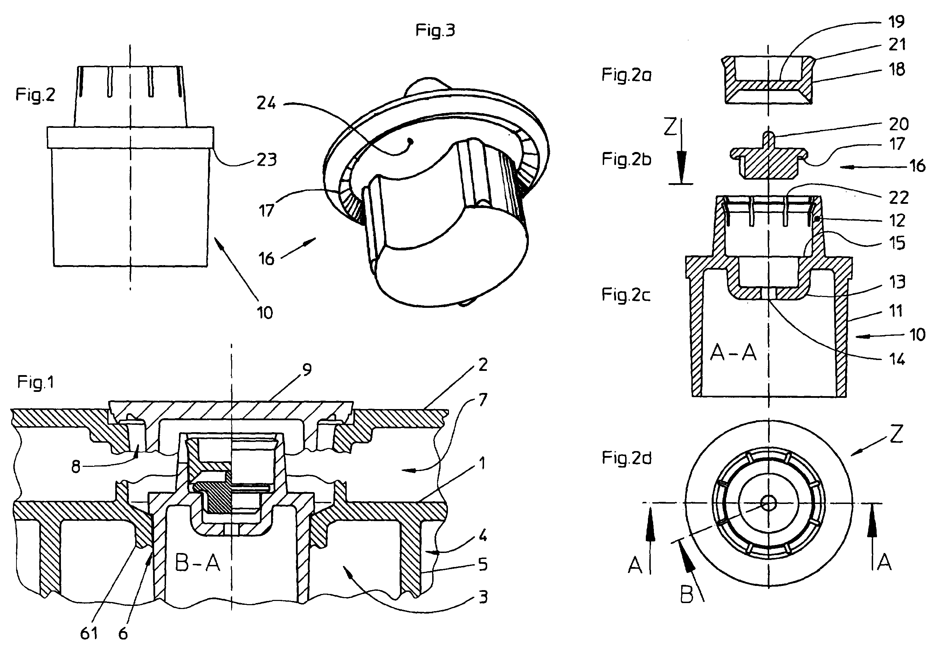

Gemäß Figur 1 besitzt der Blockdeckel einen Basisdeckel 1 und einen Abschlußdeckel 2. Die nebeneinanderliegenden Zellenkammern 3 und 4 sind durch Zellentrennwände 5 voneinander getrennt. Jede Zelle besitzt eine Einfüll- und Entgasungsöffnung 6, die mit einem in die Zelle ragenden Rohrstutzen 61 versehen ist. Dieser Rohrstutzen 61 mündet oberhalb des Basisdeckels 1 in einen allen Zellen gemeinsamen Entgasungskanal oder Entgasungsraum 7 im Blockdeckel. Der Abschlußdeckel 2 kann eine Öffnung 8 aufweisen, durch welche hindurch das weiter unten erläuterte Ventil eingesetzt wird und durch einen einfachen Verschlußknopf 9 verschlossen sein. Es kann aber der Abschlußdeckel auch aus einer sämtliche Zellen überdeckenden Platte ohne Einfüllöffnungen bestehen.

Der eigentliche Ventileinsatz besteht aus einem Ventilkörper 10 gemäß Figur 2 und Figur 2c, der einen in die Zelle ragenden Rohrstutzen 11 und einen nach oben ragenden Rohrstutzen 12 besitzt, sowie eine zwischen diesen Rohrstutzen liegende Trennwand 13 mit einer Öffnung 14. In den oberen Rohrstutzen 12 ist der eigentliche Membranventilkörper bzw. das Dichtteil 16 (Figur 2b, Figur 3) eingesetzt, der mit seinem schneidenförmigen Rand 17 (Figur 3) auf der Dichtfläche 15 aufsitzt. Gehalten wird das Dichtteil 16 durch den Niederhalter 18 (Figur 2a), welcher mit seinem Boden 19 den Nippel 20 niederdrückt und damit das Dichtteil 16 gezielt vorspannt. Damit wird ein definierter Öffungsdruck erreicht. Der Niederhalter 18 ist an seinem oberen Rand mit Vorsprüngen 21 versehen, über die er in den oberen Rohrstutzen 12 des Ventilkörpers 10 einklipsbar ist. Um die notwendige Elastizität des oberen Teiles des Rohrstutzens 12 zu erreichen, sind, wie aus Figur 2c und Figur 3 ersichtlich, an seinem Umfang mehrere Schlitze 22 vorgesehen.

Erfindungsgemäß wird der in Figur 2 fertig montiert dargestellte Ventilkörper 10 durch die Öffnung 8 im Abschlußdeckel in die Zellenöffnung 6 eingeführt und sein vorkragender Rand 23 wird mit dem Rand der durch den Rohrstutzen 61 gebildeten Öffnung dicht verschweißt. Dazu kann insbesondere eine Ultraschallverschweißung oder eine Reibschweißung verwendet werden. Bei geeignetem Material der Teile kann aber auch eine dichte Verbindung durch Kleben hergestellt werden. Durch diese Verfahrensweise wird der Ventilkörper unlösbar am Basisdeckel befestigt.

Aus dem Akkumulatorinneren tretende Gase gelangen bei entsprechendem Überdruck durch den Rohrstutzen 11, die Öffnung 14, die bei einem definierten Druck abhebende Stelle 24 des Dichtteils, einen durch die unterschiedlichen Außendurchmesser des Niederhalters 18 und Innendurchmesser des Rohrstutzens 12 gebildeten Spalt und über die Schlitze 22 in die zentrale Gaslableitung 7. Die Öffnung 8 im Abschlußdeckel ist durch einen einfachen Verschlußknopf 9 gas- und flüssigkeitsdicht verschlossen, der aus Kunststoff besteht und der, wie das Ventilteil, durch Ultraschallweißen, Reibschweißen oder durch Verklebung mit dem Deckel unlösbar verbunden wird.

Anstelle eines Oberdeckels mit Öffnungen 8 für jede Zelle kann auch so vorgegangen werden, dass sämtliche Ventile in die Öffnungen 6 der Einzelzellen eingesetzt werden und dass dann in an sich bekannten Spiegelschweißverfahren ein alte Zellen überdeckender Abschlußdeckel aufgebracht wird.

Die erfindungsgemäße Ausführungsform eines Ventils zeichnet sich durch einen außerordentlich einfachen Ausbau aus und ist insbesondere aus nur wenigen Bauteilen aufgebaut. Der Ventilkörper läßt sich leicht in die Einfüllöffnung der Akkumulatorenzelle einsetzen und kann ohne Schwierigkeiten unlösbar und gas- und flüssigkeitsdicht mit dem Rand der Öffnung verbunden werden, ohne dass zusätzliche Dichtungsmaßnahmen, wie O-Ringe und dergleichen, benötigt werden. Ein besonderer Vorteil besteht darin, dass durch die unlösbare Verbindung zwischen Deckel und Ventilkörper eine unsachgemäße Handhabung zu einem spätern Zeitpunkt ausgeschlossen wird.

Das erfingungsgemäße Ventil kann darüber hinaus eine sehr geringe Bauhöhe besitzen und durch die Verwendung eines erfindungsgemäßen Membranventils mit einem Niederhalter 18 kann der Ansprechdruck des Ventils leicht festgelegt und innerhalb enger Toleranzen gehalten werden.

## Patentansprüche

1. Mehrzelliger, dicht verschlossener Bleiakkumulator mit einem mehrere Zellen aufnehmenden Gehäuse und einem das Gehäuse abschließenden Blockdeckel, der einen Basisdeckel und einen darüberliegenden Abschlußdeckel mit einer Zentralentgasung besitzt, wobei jede Einzelzelle mit einem Entgasungsventil in ihrer Entgasungsöffnung versehen ist, dessen Auslaßöffnung mit der zentralen Entgasung in Verbindung steht, dadurch gekennzeichnet, dass jeder Einzelzelle eine Öffnung (6) im Basisdeckel (1) zugeordnet ist und dass mit dem Rand dieser Öffnung ein Ventilkörper (10) unlösbar verbunden ist, der ein Dichtteil (16) enthält.

2. Elektrischer Akkumulator nach Anspruch 1, dadurch gekennzeichnet, dass das Dichtteil (16) im Ventilkörper (10) durch einen Niederhalter (18) fixiert ist.

3. Elektrischer Akkumulator nach den Ansprüchen 1 und 2, dadurch gekennzeichnet, dass der Ventilkörper (10) in der Öffnung des Basisdeckels durch Ultraschallschweißen, Reibschweißen oder Verkleben gas- und flüssigkeitsdicht unlösbar eingesetzt ist.

4. Elektrischer Akkumulator nach einem der Ansprüche 1 bis 3, dadurch gekennzeichnet, dass im Abschlußdeckel (2) eine zur Öffnung jeder Zelle im Basisdeckel (1) korrespondierende Öffnung (8) vorgesehen ist, die durch einen gas- und flüssigkeitsdicht und unlösbar angebrachten Verschlußknopf (9) verschlossen ist.

5. Elektrischer Akkumulator nach einem der Ansprüche 1 bis 4, dadurch gekennzeichnet, dass der sämtliche Zellen verbindende Gasraum (7) oberhalb der Ventilkörper (10) durch einen die Zellen abdeckenden Abschlußdeckel (2) verschlossen ist.
